# EUROPEAN PATENT SPECIFICATION

(11) **EP 0 947 731 B1**
(45) Date of publication and mention of the grant of the patent: **09.07.2003**
(21) Application number: 98830198.2
(22) Date of filing: 31.03.1998
(51) Int. Cl.: F16H 7/18, F01L 1/02

(54) **An integrated chain drive assembly with tensioning device, particularly but not exclusively for cam to cam drives**
Kettentrieb-Einheit mit einem Kettenspanner, insbesondere, jedoch nicht ausschliesslich, für Nockenwellenantriebe
Unité d'entraînement à chaîne avec tendeur, notamment mais non exclusivement pour systèmes de distribution

(43) Date of publication of application: 06.10.1999
(73) Proprietor: Morse Tec Europe S.r.l., 20133 Milano (IT)
(72) Inventor: Baddaria, Giuseppe, 22059 Robbiate (Lecco) (IT); Zeccara, Enrico, 20043 Arcore (MI) (IT); Bestetti, Michelino, 20047 Brugherio (IT)
(74) Representative: Petruzziello, Aldo

(56) References cited:
- EP-A- 0 280 365
- EP-A- 0 297 263
- DE-A- 19 622 122
- GB-A- 2 092 705

## Description

In timing systems on vehicles, particularly but not exclusively industrial vehicles, said systems comprising two camshafts, only one of which is usually driven directly by the engine, a transmission or drive generally called a cam to cam drive is provided between one camshaft and the other. This drive generally comprises a first sprocket wheel mounted on the first shaft or driving shaft; a second driven sprocket wheel mounted on the second shaft or driven shaft; a drive chain engaging with both sprocket wheels, and an intermediate tensioning device. The tensioning device generally comprises a body or cylinder provided with fixing means and integral with a fixed chain guide shoe and a piston sliding within the body and carrying a movable guide shoe. The assembling department receives these elements each separate from the other and must position and mount each element, following the instructions given. This results in the possibility of errors, a relatively long assembling time and possible differences in assembling, and therefore in performance, between one engine and another

Document D1 (DE 196 22 122 A1), which comprises the features mentioned in the preamble of claim 1, teaches a reusable implement for temporarily holding a pair of sprockets and a tensioner during assembly thereof. The implement as such does not include any tensioner, said implement facilitates assembly, but it is not thought to remain installed on an engine system during operation. Furthermore, as it has to provide a handle portion, it is unavoidably bulky and has to be removed after assembly operations.

Document D2 (GB 2 092 705 A), -fig. 4- teaches an assembly comprising an intermediate structure for a first drive wheel, a second drive wheel and an elongate flexible drive means extending between the wheels , to transmit drive from one of said wheels to the other and engaging with both, said structure comprising a guide shoe and a tensioning shoe adjustable in position. The intermediate structure of D2 does not engage both wheels, and does not keep them such that the assembly can be transported and assembled as a whole. On the contrary the assembly of D2 is assembled on the engine, by first positioning the intermediate structure and then positioning the wheels and chain. The structure (chain or belt guiding member) of D2 engages only one wheel underneath said wheel and does not hold the two wheels together such that they can be transported and assembled as a whole.

Document D3 (EP 0 280 365 A2) discloses a flapping-preventing runner without any tensioner. Document D4 (EP 0 297 263 A1), discloses a device for transmitting drive comprising a pair of sprockets and a chain, but without any tensioning device. Both cannot reach the object of the present application.

An object of the invention is to facilitate the operations for assembling a chain drive of the cam to cam drive type.

Another object is 10 reduce assembling times. Yet another object is to allow mass production and assembling of such drives with repetitive characteristics in the drives produced.

These objects have been achieved with an assembly as stated in claim 1.

The further claims refer to further new and inventive features.

In other words, the new assembly comprises a first wheel and a second wheel; a transmission chain engaging with said sprocket wheels; a structure between said sprocket wheels that comprises a guide shoe fixed to the structure; guiding and supporting portions for the wheels; fixing means; and a cylinder-shaped part for a movable tensioning device; inside said cylinder-shaped part a movable tensioning shoe with its stem is adjustable in position.

In one embodiment, the body or cylinder with the fixing means forms one element and is made of metallic material while the guiding and supporting portions for the wheels and the fixed guide shoe form an element made of plastic and both elements are made integral or restrained with each other. In another embodiment, both the guide-supports for the wheels with the fixed shoe and the cylindrical body and fixing means are made of plastic, possibly metal-coated, in a single block.

The new assembly achieves the aforementioned objects and in particular can be produced, transported and assembled as a whole, with considerable advantages as regards assembling operations, assembly tolerances, and consistency of the characteristics of equipment incorporating such assemblies.

An exemplary unrestrictive embodiment will be described below with reference to the attached drawings in which:

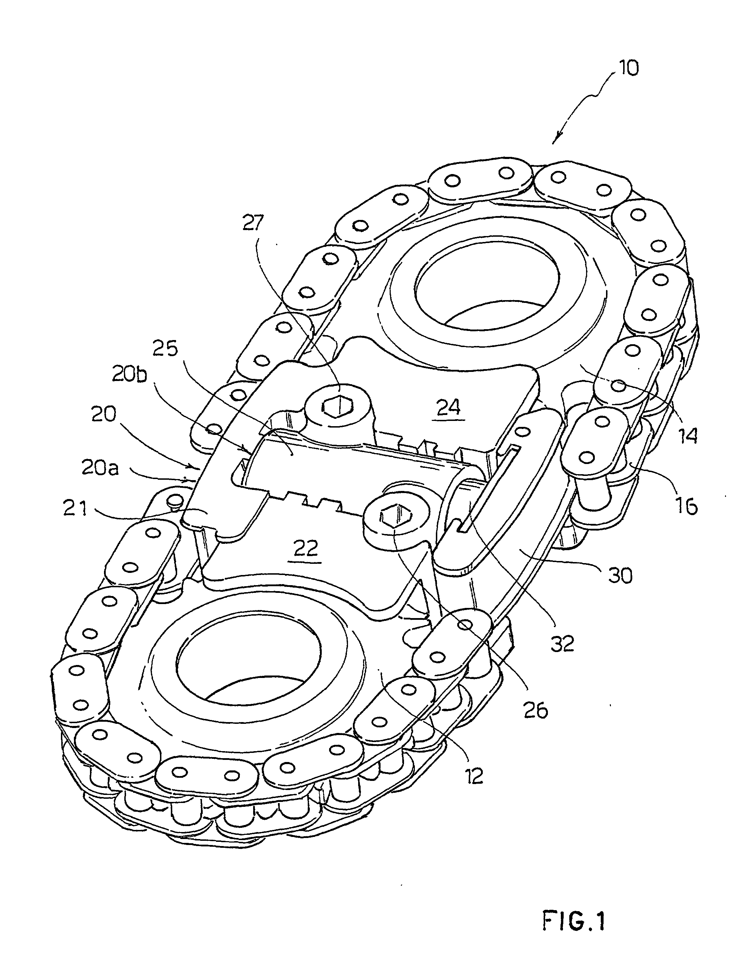

Figure 1 is a perspective view of an integrated cam to cam drive assembly according to the invention, seen from the top and from one side;
Figure 2 is a plan view of the assembly in Figure 1;
Figure 3 is a sectional view taken along a plane indicated by 3-3 in Figure 2;
Figure 4 is an enlarged sectional view of a support and guide structure of the assembly taken along a plane indicated by 4-4 in Figure 3;
Figure 5 is a sectional view taken along a plane marked 5-5 in Figure 4;

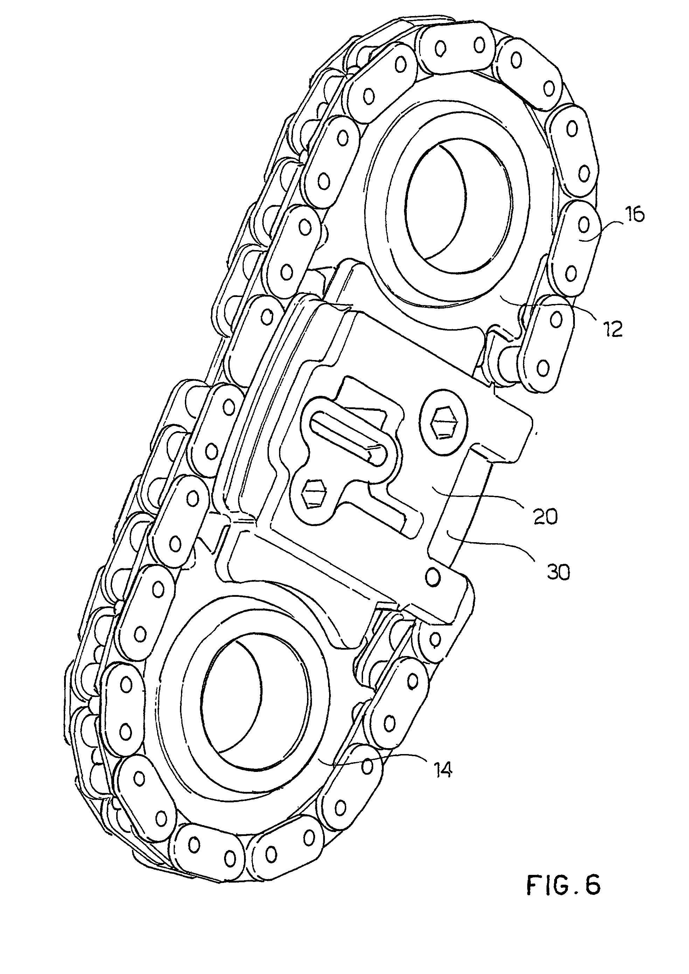

Figure 6 is a perspective view from below of the assembly of the invention.

With reference to the figures, an integrated assembly according to the invention is indicated as a whole by reference numeral 10 and comprises a first sprocket wheel 12, a second sprocket wheel 14, a transmission or drive chain 16 engaging therewith, a supporting and guiding structure 20, between the sprocket wheels, and a movable tensioning shoe 30. Whilst the toothed wheels 12, 14 and the chain 16 are of a conventional type and therefore will not be described in greater detail, the supporting and guiding structure 20 comprises a fixed guide shoe portion 21, a guiding and supporting portion 22 for the wheel 12 and a portion opposed thereto, referenced 24, for supporting and guiding the wheel 14. The structure 20 also comprises a body or cylinder 25 for the adjustable tensioning device and eyelets 26, 27 for fixing means. Whilst the parts 21, 22, 24 of the structure are made as a single plastic element 20a, the body 25 with the eyelets 26 and 27 is made as a single metal element 20b, which is made integral with, preferably restrained to element 20a in any suitable manner within the reach of a person ordinarily skilled in the art.

A structure 20 that comprises a body 25 made totally or partially of plastic, in one piece with the element 20a made of plastic, in any case comes within the scope of the present invention.

Inside an internal chamber 28 defined in the body 25, a stem 32 of a tensioning shoe 30, is slidable and adjustable in position axially. This is controlled in a usual manner by fluid fed through a conduit 42 and a check valve 44.

The supporting and guiding parts 22, 24 for the sprocket wheels each comprise a longitudinal U-shaped channel or groove defined by opposite lugs or tabs 22', 22" for the part 22 and opposite lugs or tabs 24', 24" for the part 24. The distance between the facing surfaces of the lugs or tabs 24', 24" and of the lugs 22', 22" is such as to allow rotation of the respective wheel 14 or 12.

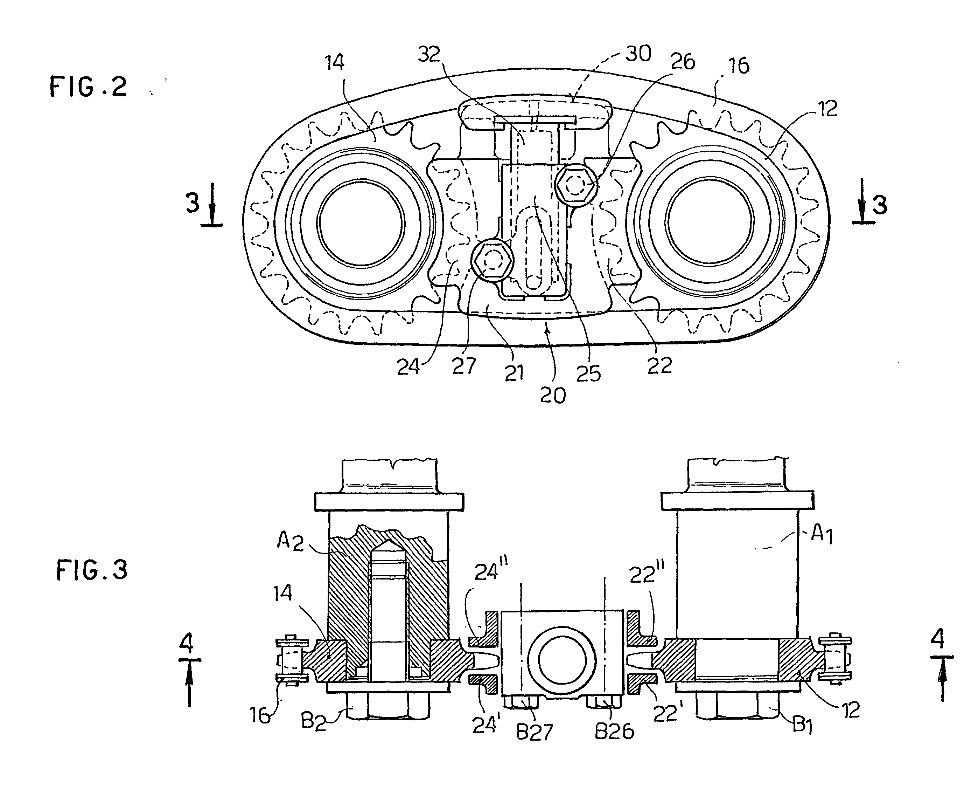

In Figure 3 the assembly is shown mounted and in particular the wheel 12 mounted on a shaft A1 and fixed thereto by the bolt Bland the wheel 14 fixed to a shaft A2 by means of the bolt B2 can be seen. Bolts B26 and B27 for fixing the structure to an underlying fixed casing (not shown) can also be seen. Each bolt B26 or B27 extends through the respective eyelet 26 and 27.

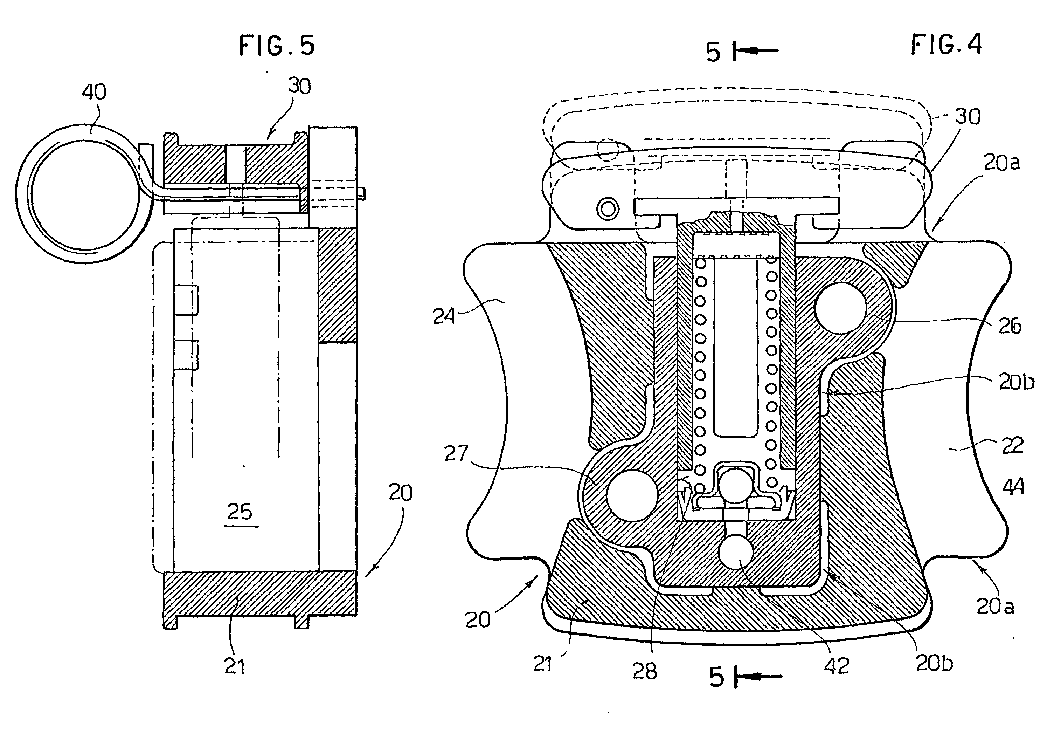

Figure 5 also shows a per se known locking pin 40, which locks the tensioning shoe 30 in a retracted position for transportation.

It should be noted that although the description has been made with reference to an exemplary embodiment consisting of a roller chain drive, it can equally be applied to chain drives of a different type.

It should also be noted that although the invention has been described with particular reference to cam to cam drives for engines, other types of drives in other fields are equally well considered possible.

## Claims

1. An assembly comprising an intermediate structure (20) for a first drive wheel, a second drive wheel and an elongated flexible drive means to transmit drive from one wheel to the other, said structure comprising a fixed guide shoe part (21) and an adjustable tensioning device with movable tensioning shoe (30),
**characterized in that** said structure further comprises opposite wheel engaging and housing parts (22, 24) **comprising** an are shaped groove defined by lugs (22', 24', 22", 24"); said lugs being spaced apart to accommodate a wheel portion so that the structure, with said first and second drive wheels and said flexible elongated drive means mounted thereon, can be transported and assembled as a whole.

2. An assembly as said in claim 1, **characterized in that** said structure comprises an element (20a) comprising said fixed guide shoe part (21) and said wheel supporting and guiding portions and an element (20b) forming a tensioning shoe housing body (25) with eyelets (26, 27) for fixing bolts, said elements (20a, 20b) being made integral to each other.

3. An assembly as said in claim 1, **characterized in that** said structure is made as a single body (22, 24) comprising said fixed guide shoe part, said wheel supporting and guiding portions and a tensioning shoe housing body (25).

4. An assembly as said in claim 1 further comprising: a first drive wheel (12), and a second drive wheel (14), an elongated flexible drive means (16) engaging both wheels and extending between said two wheels, to transmit drive from one of said wheels to the other, wherein said wheels engage said supporting and guiding portions so that said assembly can be transported and assembled as a whole.

5. An assembly as said in claim **2**, wherein the first said element (20a) is made of plastic and the second said element (206) is made of metal.

6. An assembly as in claim **3** wherein said single body structure is at least partially of plastic.

7. An assembly as said in claim **4** wherein the wheels are sprockets and the flexible elongated drive means is a chain.

## Patentansprüche

1. Eine Baugruppe, die eine Zwischenstruktur (20) für ein erstes Antriebsrad umfasst, ein zweites Antriebsrad und ein längliches, flexibles Antriebselement, zur Übertragung des Antriebs von einem Rad auf das andere, wobei die genannte Struktur einen festen Gleitschuh-Teil (21) und eine einstellbare Spannvorrichtung mit beweglichem Spannschuh (30) umfasst, **dadurch gekennzeichnet, dass** die genannte Struktur darüber hinaus gegenüberliegende Eingriff- und Gehäuse-Teile (22, 24) umfasst, die eine bogenförmige Rille einschließen, die durch Vorsprünge (22', 24', 22", 24") gebildet werden, wobei die genannten Vorsprünge in einem gewissen Abstand voneinander angeordnet sind, um einen Radabschnitt unterzubringen, so dass die Struktur, mit den genannten ersten und zweiten Antriebsrädern und den genannten, darauf montierten länglichen flexiblen Antriebselementen, als Ganzes transportiert und zusammengesetzt werden kann.

2. Eine Baugruppe gemäß Anspruch 1, **dadurch gekennzeichnet, dass** die genannte Struktur ein Element (20a) umfasst, das den genannten festen Gleitschuh-Teil (21) und die genannten Radhalte- Führungsabschnitte sowie ein Element (20b) umfasst, das einen Spannschuh-Gehäusekörper (25) mit Ösen (26, 27) zur Befestigung von Bolzen einschließt, und die genannten Elemente jeweils einteilig miteinander sind.

3. Eine Baugruppe gemäß Anspruch 1, **dadurch gekennzeichnet, dass** die genannte Struktur als Einzelkörper (22, 24) ausgebildet ist, der des genanten festen Gleitschuh-Teil, die genannten Radhalte- und Führungsabschnitte sowie einen Spannschuh-Gehäusekörper umfasst.

4. Eine Baugruppe gemäß Anspruch 1, die des Weiteren folgendes umfasst: ein erstes Antriebsrad (12) und ein zweites Antriebsrad (14), ein längliches, flexibles Antriebselement (16), das in beide Räder eingreift und sich zwischen den genannten zwei Rädern erstreckt, um den Antrieb von einem der genannten Räder auf das andere zu übertragen, wobei die genannte Räder in die genannten Halte- und Führungsabschnitte eingreifen, so dass die genannte Baugruppe als- Ganzes transportiert und montiert werden kann.

5. Eine Baugruppe gemäß Anspruch 2, wobei das genannte erste Element (20a) aus Kunststoff und das genannte zweite Element (206) aus Metall besteht.

6. Eine Baugruppe gemäß Anspruch 3, wobei die genannte Einzelkörper-Struktur zumindest teilweise aus Kunststoff besteht.

7. Eine Baugruppe gemäß Anspruch 4, wobei die Räder Kettenzahnräder sind und das längliche flexible Antriebselement eine Kette ist.

## Revendications

1. Corps comprenant une structure intermédiaire (20) pour une première couronne d'entraînement, une deuxième couronne d'entraînement et un dispositif d'entraînement flexible allongé pour transmettre la commande d'une couronne à l'autre, ladite structure comprenant une mâchoire fixe de guidage (21) et un dispositif de tension réglable avec une mâchoire de tension mobile (30), **caractérisé en ce que** ladite structure comprend également des parties de logement et d'engagement de la couronne opposée (22, 24) comprenant un sillon en forme d'arc défini par des oreilles (22', 24', 22", 24") ; lesdites oreilles étant espacées les unes des autres pour accueillir une portion de couronne de sorte que la structure avec ladite première couronne d'entraînement, ladite deuxième couronne d'entraînement et ledit dispositif d'entraînement flexible allongé monté, peut être transportée et assemblée comme un tout.

2. Corps selon la revendication 1, **caractérisé en ce que** ladite structure comprend un élément (20a) comprenant ladite mâchoire fixe de guidage (21) et lesdites parties de support et de guidage de couronne et un élément (20b) formant un corps pour loger la mâchoire de tension (25) avec des oeillets (26, 27) pour des boulons de fixation, lesdits éléments (20a, 20b) étant réalisés pour être intégrés l'un à l'autre.

3. Corps selon la revendication 1, **caractérisé en ce que** ladite structure est réalisée comme un corps unique (22, 24) comprenant ladite mâchoire fixe de guidage, lesdites parties de support et de guidage de couronne et un corps pour loger la mâchoire de tension (25).

4. Corps selon la revendication 1 comprenant également: une première couronne d'entraînement (12) et une deuxième couronne d'entraînement (14), un dispositif d'entraînement flexible allongé (16) mettant en prise les deux couronnes et s'étendant entre lesdites deux couronnes, pour transmettre la commande d'une desdites couronnes à l'autre, où lesdites couronnes s'engagent avec lesdites parties de support et de guidage de sorte que ledit corps peut être transporté et assemblé comme un tout.

5. Corps selon la revendication 2, où ledit premier élément (20a) est réalisé en plastique et ledit deuxième élément (206) est réalisé en métal.

6. Corps selon la revendication 3, où ladite seule structure du corps est au minimum en partie réalisée en plastique.

7. Corps selon la revendication 4, où les couronnes sont des pignons de chaîne et le dispositif flexible d'entraînement flexible allongé est une chaîne.
